# EUROPEAN PATENT APPLICATION

(11) **EP 2 639 659 A1**
(43) Date of publication of application: **18.09.2013**
(21) Application number: 13158464.1
(22) Date of filing: 08.03.2013
(51) Int. Cl.: G05B 17/02, G05B 23/02

(54) **Methods and apparatus for monitoring operation of a system asset**

(30) Priority: 15.03.2012 US 201213421592
(71) Applicant: General Electric Company, Schenectady, New York 12345 (US)
(72) Inventor: Ceglia, Kenneth Paul, Minden, NV 89423 (US); Williams, Scott Terrell, Minden, NV 89423 (US); Hatch, Charles Terrance, Minden, NV 89423 (US); Robertson, David Michael, Minden, NV 89423 (US)
(74) Representative: Picker, Madeline Margaret

(57) **Abstract**

A device (108) for use in monitoring operation of a plurality of system assets (102) includes a storage device (126) configured to store a model (200) of a plurality of system assets and a processor (124) coupled to the storage device. The model includes a plurality of asset images (202) associated with the plurality of system assets. The processor is configured to display the plurality of asset images, select a first asset image (426) of the plurality of asset images, receive an input representative of a first point in time (414) and an input representative of a second point in time (422), and display a context (416) of a first system asset associated with the first asset image between the first point in time and the second point in time. The context of the first system asset includes an asset image representative of the first system asset and asset measurement data (406) representative of a measured operating condition of the first system asset.

## Description

The present application relates generally to power systems and, more particularly, to methods and apparatus for use in monitoring operation of a system asset.

At least some known power systems include a plurality of components, such as generators, motors, fans, and/or other components. Such components are often stored or positioned within a building such as a power plant or a factory. A building may house a large enough number of components that it may be difficult for a user to locate desired components and/or navigate to desired components. For example, a desired component may be positioned behind and/or may be obscured by another component such that the desired component is not easily seen.

Moreover, during operation of the power system, one or more components may experience a failure, and/or may operate outside of predefined boundaries. Such a component may enter an alarm state to alert a user to the failure or the unacceptable operating conditions.

To monitor system components, at least some known systems are modeled using virtual representations of the system components. Such models may include representations of the system components and may display a status of the components. Although useful, such system models may not enable a user to view historical data of one or more system components while monitoring the operation of other system components. As such, the reliability and effectiveness of such system models in monitoring system components may be limited.

In one embodiment, a device for use in monitoring operation of a plurality of system assets is provided that includes a storage device configured to store a model of a plurality of system assets and a processor coupled to the storage device. The model includes a plurality of asset images associated with the plurality of system assets. The processor is configured to display the plurality of asset images, select a first asset image of the plurality of asset images, receive an input representative of a first point in time and an input representative of a second point in time, and display a context of a first system asset associated with the first asset image between the first point in time and the second point in time. The context of the first system asset includes an asset image representative of the first system asset and asset measurement data representative of a measured operating condition of the first system asset.

In another embodiment, a system is provided that includes a data acquisition device for determining a status of a plurality of system assets and a computing device coupled to the data acquisition device. The computing device includes a storage device configured to store a model of the plurality of system assets and a processor coupled to the storage device. The model includes a plurality of asset images associated with the plurality of system assets. The processor is configured to display the plurality of asset images, select a first asset image of the plurality of asset images, receive an input representative of a first point in time and an input representative of a second point in time, and display a context of a first system asset associated with the first asset image between the first point in time and the second point in time. The context of the first system asset includes an asset image representative of the first system asset and asset measurement data representative of a measured operating condition of the first system asset.

In yet another embodiment, a method of monitoring operation of a plurality of system assets is provided that includes displaying a model of a plurality of system assets on a display. The model includes a plurality of asset images, wherein each asset image of the plurality of asset images is representative of a system asset of the plurality of system assets. The method also includes selecting a first asset image of the plurality of asset images, receiving an input representative of a first point in time and an input representative of a second point in time, and displaying a context of a first system asset associated with the first asset image between the first point in time and the second point in time. The context of the first system asset includes an asset image representative of the first system asset, a status of the first system asset, and asset measurement data representative of a measured operating condition of the first system asset.

These and other features, aspects, and advantages of the present invention will become better understood when the following detailed description is read with reference to the accompanying drawings in which like characters represent like parts throughout the drawings, wherein:
FIG. 1 is a block diagram of an exemplary system including a plurality of system assets.
FIG. 2 is a block diagram of an exemplary two-dimensional view of a model of the system shown in FIG. 1.
FIG. 3 is a block diagram of an exemplary three-dimensional view of the model of the system shown in FIG. 1.
FIG. 4 is a timeline view of a portion of the model shown in Figs. 2 and 3.
FIG. 5 is a flow diagram of an exemplary method that may be implemented to monitor the operation of a plurality of system assets used with the system shown in FIG. 1.

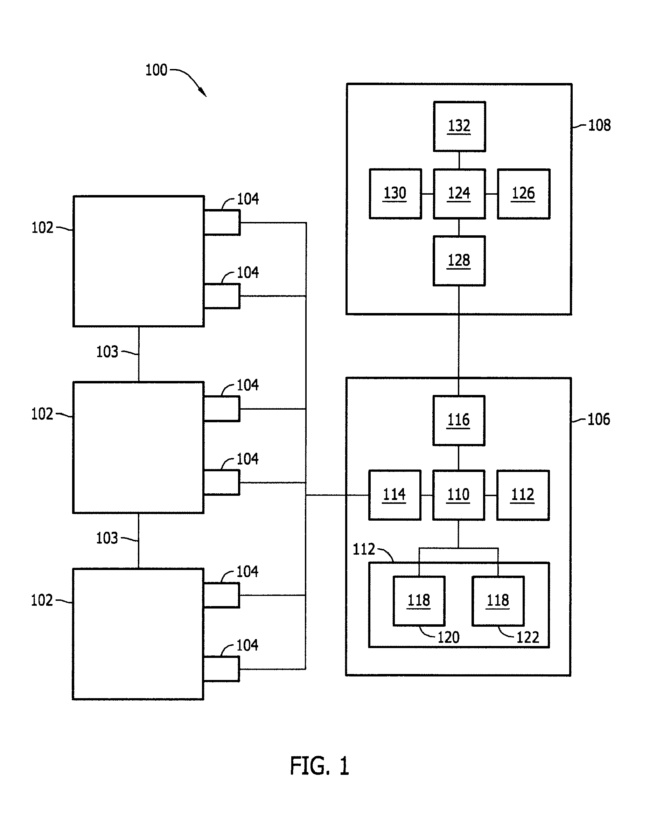

FIG. 1 is a block diagram of an exemplary system 100 that includes a plurality of system assets 102. In the exemplary embodiment, system 100 may be, or may include, a factory, an industrial system or facility, a mill, a refinery, a manufacturing facility, a power generation plant or facility, and/or any other system that includes a plurality of system assets 102. System assets 102 may include, but are not limited to only including, machines, motors, generators, pumps, fans, computer systems or devices, sensors, and/or any other device or machine that enables system 100 to function as described herein.

System assets 102 may be coupled together, for example, via one or more conduits 103 that facilitate channeling process flow between assets 102. For example, conduits 103 may include one or more pipes, cables, wires, mechanical drive or coupling systems, and/or other connectors that enable process flow to be channeled between system assets 102. Process flow may include combustion gases, steam, hydraulic fluid, water, fuel, electricity (e.g., a power output and/or a power consumption of an asset 102), and/or any other output from system assets 102 and/or input into system assets 102 that enables system 100 to function as described herein.

In the exemplary embodiment, at least one sensor 104 is coupled to at least one system asset 102 for use in measuring and/or monitoring an operating condition of asset 102. For example, if asset 102 is a rotating machine, sensors 104 may measure a vibration of a drive shaft of the machine, a rotational frequency or speed of the drive shaft, a temperature of the machine, an operating pressure within the machine, and/or any other operating condition of any component or device that enables system 100 to function as described herein. Moreover, sensors 104 may be coupled to conduits 103 to measure and/or monitor conduits 103 and/or process flow channeled through conduits 103.

System 100 also includes at least one data acquisition device 106 and at least one computing device 108 that is coupled to data acquisition device 106. In the exemplary embodiment, data acquisition device 106 includes a processor 110 coupled to one or more memory devices 112, a sensor interface 114, a communication interface 116, and one or more databases 118.

Processor 110 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

In the exemplary embodiment, memory device 112 is a storage device that includes a computer readable storage medium, such as, without limitation, random access memory (RAM), flash memory, a hard disk drive, a solid state drive, a diskette, a flash drive, a compact disc, a digital video disc, and/or any suitable memory. In the exemplary embodiment, memory device 112 includes data and/or instructions that are executable by processor 110 (i.e., processor 110 is programmed by the instructions) to enable processor 110 to perform the functions described herein.

Sensor interface 114 is coupled to sensors 104 for receiving signals representative of measured operating conditions of assets 102. More specifically, sensor interface 114 receives signals from sensors 104 via a wireless connection and/or via a wired connection to sensors 104. In the exemplary embodiment, sensor interface 114 converts and/or adjusts the signals received from sensors 104 for use with processor 110. In one embodiment, sensor interface 114 includes an analog-to-digital converter (ADC) that converts analog signals received from sensors 104 to digital data representative of the measured operating conditions (hereinafter referred to as "asset measurement data"), and the asset measurement data is transmitted to processor 110. In the exemplary embodiment, data acquisition device 106 determines a status or condition of each system asset 102 based on the asset measurement data received.

Communication interface 116 may include, without limitation, a network interface controller (NIC), a network adapter, a transceiver, or any other communication interface or device that enables data acquisition device 106 to operate as described herein. In the exemplary embodiment, communication interface 116 may connect to computing device 108 using any suitable wired or wireless network and/or communication protocol.

In the exemplary embodiment, databases 118 include a measurement database 120 and a model database 122. Alternatively, databases 118 may include any other database, and/or measurement database 120 and model database 122 may be combined into a single database 118. In one embodiment, databases 118 are included within one or more memory devices 112. Alternatively, databases 118 are included within one or more remote storage devices, such as a network attached storage (NAS) device, an external hard drive, a remote computing device, and/or any other storage device that enables data acquisition device 106 to function as described herein.

In the exemplary embodiment, processor 110 stores asset measurement data received from sensors 104 in measurement database 120. The measurement data includes historical asset measurement data for each asset 102 received during a predefined period of time. Moreover, processor 110 stores the status or condition of each asset 102 (also referred to herein as "asset status") in measurement database 120. For example, the asset status may indicate that asset 102 is in an alarm state, is operating normally, is operating at a particular efficiency level, and/or any other status associated with asset 102.

Moreover, in the exemplary embodiment, processor 110 (or another device) stores components of a model (not shown in FIG. 1) of system 100 and/or system assets 102 in model database 122. In the exemplary embodiment, the model components include data associated with each system asset 102. For example, the model components may include an image or a graphical representation of each asset 102, a location of each asset 102, an identifier for each asset 102, one or more connections to other assets 102, operating condition thresholds and/or alarm thresholds for each asset 102, and/or any other data associated with system assets 102. In one embodiment, a user or an administrator may input the model components into model database 122 for use in creating a model of system 100. As used herein, the term "model" refers to a visual representation of a system or a component. For example, the model may be a computer-based representation that displays a graphical indicator representing a type, identity, location, and/or any other characteristic of the system or component.

In the exemplary embodiment, computing device 108 is coupled to data acquisition device 106 for receiving data from data acquisition device 106 and/or displaying a model of system 100. Computing device 108 includes a processor 124 coupled to a memory device 126, a communication interface 128, a user input device 130, and a display 132. In the exemplary embodiment, computing device 108 is a mobile device, such as a laptop, a smartphone, a personal digital assistant (PDA), a tablet computer, and/or any other device that functions as described herein. Alternatively, computing device 108 is a desktop computer, a server computer, and/or any other computing device that enables system 100 to function as described herein.

Processor 124 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

Memory device 126 includes a computer readable storage medium, such as, without limitation, random access memory (RAM), flash memory, a hard disk drive, a solid state drive, a diskette, a flash drive, a compact disc, a digital video disc, and/or any suitable memory. In the exemplary embodiment, memory device 126 includes data and/or instructions that are executable by processor 124 (i.e., processor 124 is programmed by the instructions) to enable processor 124 to perform the functions described herein.

Communication interface 128 may include, without limitation, a network interface controller (NIC), a network adapter, a transceiver, or any other communication interface or device that enables computing device 108 to operate as described herein. In the exemplary embodiment, communication interface 128 may connect to data acquisition device 106 using any suitable wired or wireless network and/or communication protocol.

User input device 130 includes, without limitation, a keyboard, a keypad, a touch-sensitive screen, a mouse, a scroll wheel, a pointing device, an audio input device employing speech-recognition software, and/or any suitable device that enables a user to input data into computing device 108 and/or retrieve data from computing device 108. Display 132 includes, without limitation, a liquid crystal display (LCD), a vacuum fluorescent display (VFD), a cathode ray tube (CRT), a plasma display, a light-emitting diode (LED) display, one or more LEDs, and/or any suitable visual output device capable of displaying graphical data and text to a user. In one embodiment, display 132 may be a touch-sensitive screen that incorporates aspects of user input device 130, for example, by enabling a user to input data and/or commands through the screen.

During operation, sensor interface 114 of data acquisition device 106 receives sensor measurement signals from sensors 104 and converts the signals into asset measurement data that is stored (by processor 110) in measurement database 120. Data acquisition device 106 also generates or receives data representative of the status of each asset 102 (i.e., data representative of the asset status). Moreover, data acquisition device 106 receives or generates a plurality of model components representative of one or more aspects of system assets 102, and stores the model components in model database 122. The model components, asset status, and asset measurement data are transmitted to computing device 108 via communication interface 116.

In the exemplary embodiment, computing device 108 receives the model components, asset status, and asset measurement data from data acquisition device 106 and stores the components and data (and/or a cached version of the components and/or data) in memory device 126. Processor 124 retrieves the model components, asset status, and asset measurement data from memory device 126 and displays the model of system 100 on display 132 based on the model components, asset status, and/or asset measurement data.

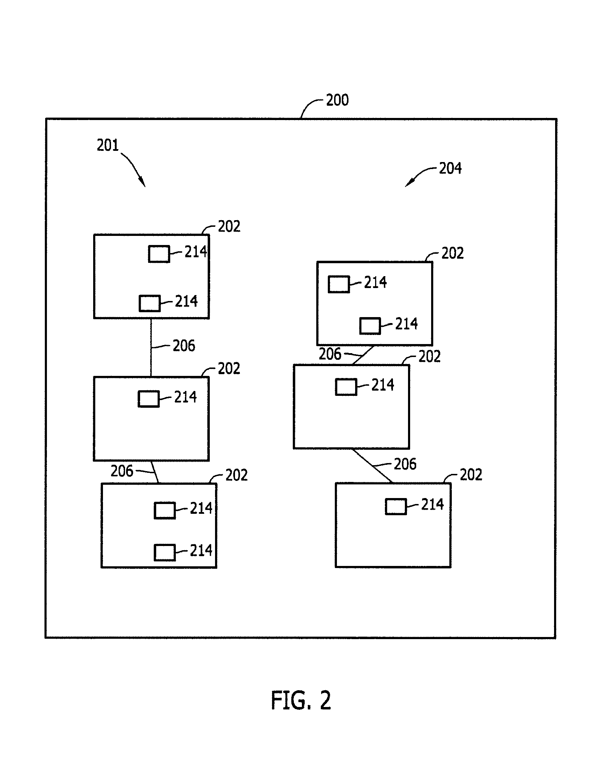

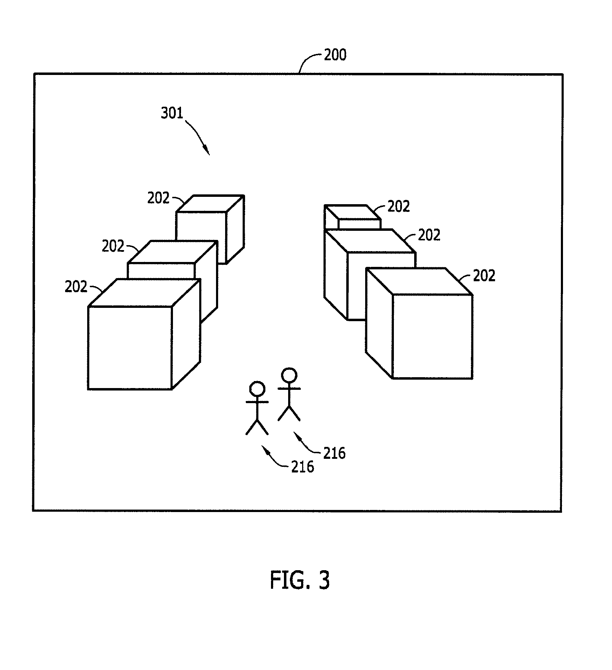

FIG. 2 is a block diagram of an exemplary graphical representation or model 200 of a system, such as system 100 (shown in FIG. 1). More specifically, FIG. 2 illustrates a two-dimensional (2D) view 201, such as a top view 201, of model 200. FIG. 3 is a block diagram illustrating a three-dimensional (3D) view 301 of model 200. For example, model 200 may be a stereoscopic 3D display of asset images 202 that enables a user to view a virtual representation of system 100 on display 132.

In the exemplary embodiment, model 200 is generated from components and/or data stored within memory device 126 and/or displayed by display 132 of computing device 108 (shown in FIG. 1). Alternatively or additionally, model 200 may be stored within, and/or displayed by, at least one device or system remote from computing device 108, such as data acquisition device 106.

In the exemplary embodiment, model 200 displays a representation or image (hereinafter referred to as an "asset image 202") of at least one system asset 102 (shown in FIG. 1) on display 132. Moreover, model 200 displays a location 204 or relative position of each system asset 102 within model 200, for example, by positioning each asset image 202 within model 200 at a location 204 corresponding to system asset 102 associated with asset image 202. Accordingly, a position of each asset image 202 within model 200 corresponds to a relative position, within system 100, of each system asset 102 associated with, or represented by, asset image 202.

In the exemplary embodiment, model 200 is generated by mapping each system asset 102 with a physical location. For example, a user may use a global positioning satellite (GPS) enabled camera and/or another device to identify a physical location of system asset 102, and to automatically and/or to manually associate the physical location of system asset 102 with an associated asset image 202 within model 200. In addition, data associated with system asset 102, such as asset measurement data, operating conditions, process parameters, asset status, and/or any other details, may be associated with asset image 202. The data associated with each system asset 102 may be accessed and/or displayed by selecting the associated asset image 202 within model 200. For example, a user may select an asset image 202, using user input device 130, to receive data and/or a status associated with system asset 102.

Asset images 202, in the exemplary embodiment, are coupled together via one or more component connections 206 that are representative of process flow connections, such as conduits 103 (shown in FIG. 1), between system assets 102 associated with images 202. In the exemplary embodiment, when a system asset 102 is selected by a user, component connections 206 coupled to asset 102 are emphasized. Moreover, a graphical representation of the process flow entering and/or exiting system asset 102 via component connections 206 may be displayed, and/or data representative of characteristics of the process flow may be displayed, when asset 102 is selected.

As used herein, the term "emphasize" refers to displaying one or more asset images 202, component connections 206, and/or any other portion of model 200 in a more visible or pronounced manner as compared to a display of a non-emphasized, or "normal," portion of model 200. For example, one or more asset images 202 may be emphasized by highlighting asset image 202 in a brighter or more visible color in contrast to the color of other asset images 202 within model 200, by increasing a contrast or brightness of asset image 202 with respect to other asset images 202, and/or by any other manner that enables model 200 to function as described herein.

In one embodiment, processor 124 adjusts an asset image 202 to graphically display the status of system asset 102 associated with image 202. In one embodiment, processor 124 may cause asset image 202 to move back and forth, i.e., a type of oscillation, to display a vibration of system asset 102. Processor 124 may increase the rate of movement of asset image 202 if the vibration of system asset 102 increases, and may decrease the rate of movement of asset image 202 if the vibration of system asset 102 decreases. In another embodiment, processor 124 may adjust asset image 202 by displaying asset image 202 in a color representative of a temperature of system asset 102. Processor 124 may increase a brightness, depth, saturation, and/or hue of the color, and/or may change any other characteristic of the color if the temperature increases, and may decrease the brightness, depth, saturation, and/or hue of the color, and/or may change any other characteristic of the color if the temperature of system asset 102 decreases.

Moreover, in the exemplary embodiment, processor 124 displays a location of a plurality of sensors 104 (shown in FIG. 1) within model 200 using a plurality of sensor images 214. Accordingly, the location of each sensor image 214 within model 200 corresponds to a location of each associated sensor 104 within system 100.

In one embodiment, a plurality of users may access and/or interact with model 200 and/or asset images 202. For example, model 200 may represent a virtual reality environment in which a plurality of technicians and/or other users may collaborate and/or troubleshoot issues relating to system assets 102 represented within model 200. Each user may access model 200 through a network connection. Moreover, each user may be represented within model 200 by a user image 216, and each user may interact with every other user within model 200. Users may also interact with system assets 102 by selecting, or virtually accessing, asset images 202 associated with system assets 102. As used herein, the term "virtually accessing" refers to controlling user image 216 such that a portion of image 216, such as a representation of a user's hand, contacts asset image 202 within model 200. For example, a first user may select an asset image 202 by virtually accessing asset image 202, and the status of system asset 102 represented by asset image 202 may be displayed within model 200 such that each user may view the displayed status.

Moreover, one or more images and/or video feeds, may be incorporated within model 200 and/or may be linked to model 200. For example, a user may select an asset image 202 to display images and/or video captured by one or more cameras (not shown) positioned to record system asset 102 associated with asset image 202.

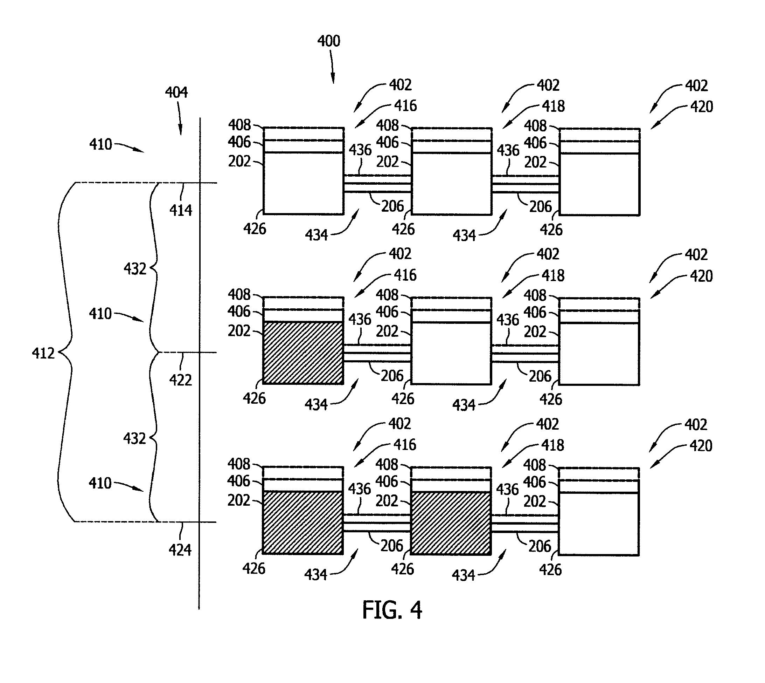

FIG. 4 is an exemplary timeline view 400, or timeline 400, of a portion of model 200 (shown in FIG. 2) including an asset context 402 of a plurality of assets 102 within system 100 (both shown in FIG. 1) over time 404. In the exemplary embodiment, each asset context 402 includes asset measurement data 406, asset image 202, and/or an asset status 408 at a point in time 410.

Asset status 408, in the exemplary embodiment, includes the status of asset 102 as described above with reference to Figs. 1-3. Accordingly, asset status 408 includes data indicative of whether asset 102 is in an alarm state, is operating normally, is operating at a particular efficiency level, and/or any other status associated with asset 102. In one embodiment, a graphical representation of asset status 408 is included within asset image 202. For example, asset image 202 may be shaded or imbued with a color, such as red, to indicate asset status 408 (e.g., that asset 102 is in an alarm state).

In the exemplary embodiment, images and data associated with each asset 102 (e.g., asset measurement data 406, asset image 202, and asset status 408) are stored in memory, such as memory device 112 and/or memory device 126 (shown in FIG. 1), at each point in time 410 within a recording period 412. For example, in the exemplary embodiment, an asset image 202, or a change to asset image 202 (if applicable), is stored at each point in time 410 for each asset 102.

In the exemplary embodiment, recording period 412 is a period of time between a startup of an asset 102 and/or system 100 until a shutdown of asset 102 and/or system 100. Alternatively, recording period 412 may be any other time period defined and/or input by a user, a device, and/or a system. Recording period 412 includes a plurality of points in time 410 at which data and/or images are stored in memory for each asset 102. The data is compiled into an asset context 402 for each asset 102 and is displayed to the user, for example, via display 132 (shown in FIG. 1).

Accordingly, at a first point in time 414, an asset context 416 of a first asset 102 (referred to as "first asset context 416"), an asset context 418 of a second asset 102 (referred to as a "second asset context 418"), and an asset context 420 of a third asset 102 (referred to as a "third asset context 420") are stored and/or displayed to the user within model 200. In a similar fashion, first asset context 416, second asset context 418, and third asset context 420 are stored at a second point in time 422 and a third point in time 424. It should be recognized that, although asset contexts 402 for three assets 102 are illustrated in FIG. 4, asset contexts 402 for any number of assets 102 may be stored and/or displayed to the user. Third point in time 424 is later in time than second point in time 422, and second point in time 422 is later in time than first point in time 414.

Moreover, asset image 202 may be selected to display asset context 402 associated therewith. For example, a first asset image 426 may be selected to display first asset context 416, a second asset image 428 may be selected to display second asset context 418, and a third asset image 430 may be selected to display third asset context 420.

It should be recognized that recording period 412 and/or timeline 400 are not limited to only including first, second, and third points in time 414, 422, and 424. Rather, any number of points in time 410 may be included within recording period 412 and/or timeline 400, and any number of points in time 410 may be included between first, second, and/or third points in time 414, 422, and/or 424. For example, first, second, and/or third points in time 414, 422, and/or 424 may not be sequential points in time 410, but may be separated by one or more time intervals 432 such that asset contexts 402 are stored and/or displayed after each time interval 432 has elapsed to reduce processing and/or data storage requirements. In one embodiment, asset context 402 is displayed at each point in time 410 between first point in time 414, second point in time 422, and/or third point in time 424.

In a similar manner, a context 434 for each conduit 103 (shown in FIG. 1) (referred to as a "conduit context 434") is also recorded and/or displayed at each point in time 410 in a similar manner as asset contexts 402. Conduit contexts 434 each include a process flow measurement 436 representative of the measured or calculated process flow through conduit 103, component connection 206 associated with conduit 103, and/or any other data and/or image that enables system 100 and model 200 to function as described herein.

In the exemplary embodiment, a user may interact with model 200 and cause model 200 to display timeline 400 of system 100 (e.g., of one or more assets 102 and/or conduits 103). More specifically, the user may cause model 200 to display one or more asset contexts 402 and/or conduit contexts 434 at a plurality of points in time 410 (e.g., past or historical points in time 410) in a virtual "playback" mode of operation. Accordingly, the user may cause model 200 to "rewind" or "playback" asset context 402 of one or more assets 102 and/or conduit context 434 of one or more conduits 103 from past data and/or images stored in memory. For example, a plurality of asset contexts 402 may be displayed synchronously with respect to each other during a playback of timeline 400. In a further example, first asset context 416 may be displayed at the same point in time 410, such as first point in time 414 (i.e., synchronously) as second asset context 418 and/or third asset context 420. Moreover, as a user causes the playback of timeline 400 to progress, first asset context 416, second asset context 418, and/or third asset context 420 may be displayed synchronously at second point in time 422 and/or third point in time 424. At each point in time 410, model 200 displays the historical values of each asset context 402 for the associated point in time 410 (i.e., the values stored in memory during the actual time represented by point in time 410).

A user may observe a progression of failures or other asset status 408 as time 404 progresses, such as a progression of assets 102 entering an alarm state (shown by shading asset images 202 within FIG. 4) as time 404 progresses. For example, a first system asset 102 may enter the alarm state at second point in time 422 and first asset image 426 is adjusted as described above with reference to Figs. 2 and 3 to indicate the alarm state of first system asset 102. At third point in time 424, a second system asset 102 may enter the alarm state as a result of first system asset 102 entering the alarm state, and second asset image 428 is adjusted to indicate the alarm state of second system asset 102. Accordingly, the troubleshooting and/or diagnostics of system 100 and/or system assets 102 may be facilitated by model 200.

Moreover, the user may cause model 200 to display timeline 400, or a portion thereof, forwards in time (i.e., in a time direction from first point in time 414 towards third point in time 424) or backwards in time (i.e., in a time direction from third point in time 424 towards first point in time 414). Moreover, the user may cause the virtual playback of timeline 400 (i.e., of asset context 402) to be displayed at one or more time intervals 432 to "fast-forward" or "fast-rewind" through timeline 400.

In the exemplary embodiment, the user may cause model 200 to display real-time data (e.g., asset context 402) for one or more assets 102 within system 100 while simultaneously causing model 200 to playback asset context 402 of one or more different assets 102 within system 100. As used herein, the term "real-time" data refers to data that represents a current operation condition of a machine or component, such as asset 102. In contrast, "historical" data refers to data that represents an operation of the machine or component, such as asset 102, at a point in time 410 in the past, such as at first point in time 414, second point in time 422, or third point in time 424.

Moreover, the user may cause model 200 to "freeze" the display of asset context 402 of one or more assets 102 (i.e., cause asset context 402 to be displayed at an unchanging point in time 410) while causing model 200 to display a virtual playback of asset context 402 of one or more different assets 102 within system 100. Accordingly, during the playback of timeline 400, the user may easily view asset measurement data 406, asset image 202, and/or asset status 408, and changes therein, as time progresses and/or regresses through timeline 400.

In one embodiment, model 200 may display a baseline, or stored version, of asset context 402 (e.g., from a prior or expected operation of system 100 and/or asset 102) for one or more assets 102 while simultaneously displaying either the real-time asset context 402 or asset context 402 at a point in time 410 within timeline 400. Moreover, model 200 may display asset context 402 of one or more assets 102 if a predefined condition is met. For example, model 200 may display first asset context 416 if a system asset 102 associated therewith enters an alarm state and/or if an operating condition of asset 102 exceeds a predefined first threshold or falls below a predefined second threshold.

Accordingly, the playback function of model 200 may facilitate enabling the user to diagnose asset failures and/or operational inefficiencies by visually depicting the changes of asset context 402 over time 404 and/or by visually displaying asset context 402 at the same time a prior asset context 402 is displayed.

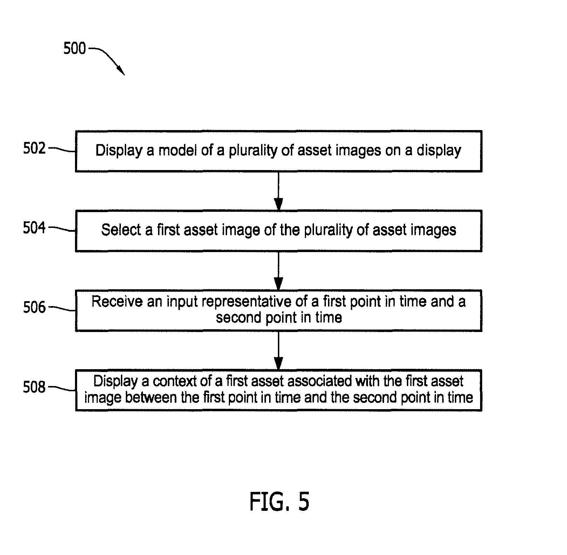

FIG. 5 is a flow diagram of an exemplary method 500 that may be implemented to monitor operation of a plurality of assets of a system, such as system assets 102 of system 100 (both shown in FIG. 1). In the exemplary embodiment, method 500 is embodied within a plurality of computer-executable instructions stored within memory device 126 of computing device 108 (both shown in FIG. 1), and is executed by processor 124 (shown in FIG. 1) of computing device 108.

In the exemplary embodiment, a model (such as model 200 shown in FIG. 2) of a plurality of asset images 102 (shown in FIG. 2) that are each representative of one of a plurality of system assets 102 is stored in memory device 126. Model 200 is displayed 502 on a display, such as display 132 (shown in FIG. 1).

A first asset image 202 is selected 504, for example, by receiving a user input (or an input from a device) via user input device 130 and/or via communication interface 128 (shown in FIG. 1). For example, a user may manipulate user input device 130 to select first asset image 202 within model 200, and the input is transmitted to processor 124. Processor 124 selects 504 first asset image 202 based on the input, and may display data of a system asset 102 associated with first asset image 202.

Moreover, an input representative of a first point in time 414 and an input representative of a second point in time 422 (both shown in FIG. 4) are received 506 via user input device 130 and/or via communication interface 128. In one embodiment, first point in time 414 represents a start time for a virtual playback of an asset 102 associated with first asset image 202, and second point in time 422 represents an end time for the virtual playback.

In the exemplary embodiment, a context 402 of a first system asset 102 associated with first asset image 202 is displayed 508 between first point in time 414 and second point in time 422. Context 402 includes asset image 202 that is representative of system asset 102, asset status 408 that is representative of the status of first system asset 102, and asset measurement data 406 that is representative of a measured operating condition of first system asset 102. In one embodiment, processor 124 also displays asset context 402 of at least one other system asset 102 (i.e., of at least one asset 102 that is not associated with a selected asset image 202) within model 200.

For example, processor 124 may cause model 200 to display 508 asset context 402 of first system asset 102 from first point in time 414 to third point in time 424, from third point in time 424 to first point in time 414, or from or to any other points in time 410. In one embodiment, processor 124 receives input from the user, via user input device 130, to select parameters for the playback, such as a playback direction (e.g., forwards in time or backwards in time), a start point in time 410, an end point in time 410, and/or a time interval 432 (shown in FIG. 4). While method 500 has been described with respect to a playback of asset context 402 of a selected system asset 102, it should be understood that method 500 may be used to playback asset contexts 402 of a plurality of system assets 102 at the same time.

A technical effect of the apparatus, systems, and methods described herein includes at least one of (a) displaying a model of a plurality of system assets on a display, the model including a plurality of asset images, wherein each asset image of the plurality of asset images is representative of a system asset of the plurality of system assets; (b) selecting a first asset image of a plurality of asset images; (c) receiving an input representative of a first point in time and an input representative of a second point in time; and (d) displaying a context of a first system asset associated with a first asset image between a first point in time and a second point in time, wherein the context of the first system asset includes an asset image representative of the system asset, a status of the first system asset, and asset measurement data representative of a measured operating condition of the first system asset.

The system described herein efficiently and robustly displays an asset context for a plurality of system assets. A model of the system assets is provided and displayed on a display. A plurality of asset images is included within the model, and each asset image represents a system asset. A plurality of conduits coupled to the system assets are represented within the model as a plurality of component connections. A user may select an asset image to display the asset context of the system asset associated with the asset image. Moreover, the user may select a first, or start point in time, and a second, or end point in time. The model displays historical asset measurement data, asset images, and/or asset status associated with the system asset between the start point in time and the end point in time. Accordingly, a user may quickly and efficiently obtain historical information for the system assets in the system, thus facilitating troubleshooting and analysis of the system.

Exemplary embodiments of systems, methods, and apparatus for use in monitoring operation of a plurality of system assets are described above in detail. The systems, methods, and apparatus are not limited to the specific embodiments described herein, but rather, components of the apparatus and/or systems, and/or steps of the methods may be utilized independently and separately from other components and/or steps described herein. For example, the computing device described herein may also be used in combination with other systems and methods, and is not limited to practice with only the system or the data acquisition device as described herein. Rather, the exemplary embodiment can be implemented and utilized in connection with many other power system or industrial applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A device (108) for use in monitoring operation of a plurality of system assets (102), said device comprising:
a storage device (126) configured to store a model (200) of a plurality of system assets, wherein the model includes a plurality of asset images (202) associated with the plurality of system assets; and
a processor (124) coupled to said storage device and configured to:
display the plurality of asset images;
select a first asset image (426) of the plurality of asset images;
receive an input representative of a first point in time (414) and an input representative of a second point in time (422);
display a context (416) of a first system asset associated with the first asset image between the first point in time and the second point in time, wherein the context of the first system asset includes an asset image representative of the first system asset and asset measurement data (406) representative of a measured operating condition of the first system asset.

2. A device in accordance with Claim 1, wherein said processor (124) is configured to display the context (416) of the first system asset (102) from the first point in time (414) to the second point in time (422), wherein the second point in time is later than the first point in time.

3. A device in accordance with Claim 1 or Claim 2, wherein said processor (124) is configured to display the context (416) of the first system asset (102) from the second point in time (422) to the first point in time (414), wherein the second point in time is later than the first point in time.

4. A device in accordance with Claim 1, 2 or 3, wherein said processor (124) is configured to display real-time asset measurement data (406) of a second system asset (102) while displaying the context (416) of the first system asset between the first point in time (414) and the second point in time (422).

5. A device (108) in accordance with any preceding Claim, wherein said processor (124) is configured to display a context (418) of a second system asset (102) of the plurality of system assets synchronously with respect to the display of the first system asset context.

6. A device (108) in accordance with any preceding Claim, wherein a plurality of points of time (410) are defined between the first point in time (414) and the second point in time (422), said processor (124) is configured to display the context (416) of the first system asset (102) at each point in time between the first point in time and the second point in time.

7. A device (108) in accordance with any preceding Claim, wherein a plurality of points in time (410) are defined between the first point in time (414) and the second point in time (422), said processor (124) is configured to display the context (416) of the first system asset (102) at predefined time intervals (432) between the first point in time and the second point in time.

8. A system (100) comprising:
a data acquisition device (106) for determining a status of a plurality of system assets (102); and
a computing device (108) coupled to said data acquisition device, said computing device comprising a device in accordance with any one of claims 1 to 7.

9. A method of monitoring operation of a plurality of system assets, said method comprising:
displaying a model (200) of a plurality of system assets (102) on a display, the model including a plurality of asset images (202), wherein each asset image of the plurality of asset images is representative of a system asset of the plurality of system assets;
selecting a first asset image of the plurality of asset images (202);
receiving an input representative of a first point in time (414) and an input representative of a second point in time (422); and
displaying a context (416) of a first system asset associated with the first asset image between the first point in time and the second point in time, wherein the context of the first system asset includes an asset image representative of the first system asset, a status of the first system asset, and asset measurement data (406) representative of a measured operating condition of the first system asset.

10. A method in accordance with Claim 9, wherein said displaying a context of a first system asset comprises displaying the context (416) of the first system asset from the first point in time to the second point in time, wherein the second point in time is later than the first point in time.

11. A method in accordance with Claim 9 or Claim 10, wherein said displaying a context (416) of a first system asset comprises displaying the context (416) of the first system asset from the second point in time to the first point in time, wherein the second point in time is later than the first point in time.

12. A method in accordance with Claim 9, 10 or 11, further comprising displaying real-time asset measurement data (606) of a second system asset while displaying the context (416) of the first system asset between the first point in time and the second point in time.

13. A method in accordance with any one of Claims 9 to 12, wherein a plurality of points of time are defined between the first point in time and the second point in time, said displaying a context (416) of the first system asset comprises displaying the context of the first system asset at each point in time between the first point in time and the second point in time.

14. A method in accordance with any one of Claims 9 to 13, wherein a plurality of points in time are defined between the first point in time and the second point in time, said displaying a context (416) of the first system asset comprises displaying the context of the first system asset at predefined time intervals between the first point in time and the second point in time.
